# FASCICULE DE BREVET EUROPEEN

(11) **EP 1 862 644 B1**
(45) Date de publication et mention de la délivrance du brevet: **04.11.2009**
(21) Numéro de dépôt: 07075389.2
(22) Date de dépôt: 23.05.2007
(51) Int. Cl.: F01D 9/04, F02C 7/04

(54) **Dispositif de guidage d'un flux d'air pour turbomachine, et turbomachine et diffuseur associés**
Leitvorrichtung für den Luftstrom in einem Strahltriebwerk, und enstprechendes Strahltriebwerk und Diffusor
Air-flow guiding device for a turbomachine, and corresponding turbomachine and diffuser

(30) Priorité: 29.05.2006 FR 0604745
(43) Date de publication de la demande: 05.12.2007
(73) Titulaire: SNECMA, 75015 Paris (FR)
(72) Inventeur: Daguenet, Luc, 91100 Corbeil Essonnes (FR)
(74) Mandataire: Ramey, Daniel

(56) Documents cités:
- EP-A2- 0 942 150
- EP-A2- 1 378 631
- EP-A2- 1 431 516
- GB-A- 657 366
- US-A- 4 503 668
- US-A- 5 211 003

## Description

La présente invention concerne un dispositif de guidage d'un flux d'air à l'entrée d'une chambre de combustion dans une turbomachine, telle qu'un turboréacteur ou un turbopropulseur d'avion.

Un dispositif de ce type est agencé en sortie d'un compresseur et comprend un redresseur suivi d'un diffuseur, le diffuseur comportant deux parois de révolution coaxiales reliées entre elles par des cloisons radiales, et le redresseur comportant deux viroles coaxiales alignées axialement avec les deux parois de révolution du diffuseur, respectivement, et entre lesquelles s'étendent des aubes sensiblement radiales.

Dans la technique actuelle, il est connu de former le redresseur et le diffuseur indépendamment l'un de l'autre pour mieux optimiser leur forme, leur dimension et leur fonction, puis de fixer par des moyens appropriés l'extrémité aval du redresseur à l'extrémité amont du diffuseur. Cependant, les moyens de fixation utilisés sont lourds et encombrants et peuvent créer des pertes de charge de l'écoulement d'air dans le dispositif.

Il est également connu de former le redresseur et le diffuseur d'une seule pièce. Cependant, cette technique est très limitée car elle ne permet pas d'optimiser les fonctions et de former des redresseurs complexes et notamment des redresseurs comportant un grand nombre d'aubes de faible dimension radiale (tel que par exemple un redresseur ayant plus de 100 aubes). Il est en particulier extrêmement complexe de réaliser de fonderie un redresseur et un diffuseur d'une seule pièce car les noyaux de fonderie qui sont prévus entre les aubes du redresseur et les cloisons radiales du diffuseur sont peu accessibles et sont donc très difficiles voire impossibles à extraire.

EP-1378631 et US 5211003 illustrent l'état de la technique.

L'invention a notamment pour but d'apporter une solution simple, économique, et efficace à ces problèmes de la technique antérieure.

L'invention propose à cet effet un dispositif de guidage d'un flux d'air à l'entrée d'une chambre de combustion dans une turbomachine, comprenant un redresseur suivi d'un diffuseur, le redresseur comportant deux viroles coaxiales entre lesquelles s'étendent des aubes sensiblement radiales, et le diffuseur comportant deux parois de révolution coaxiales reliées entre elles par des cloisons radiales, caractérisé en ce qu'une des viroles du redresseur est formée d'une seule pièce avec une paroi de révolution du diffuseur, l'autre des viroles du redresseur étant rapportée et fixée sur l'autre paroi de révolution du diffuseur, les aubes du redresseur étant solidaires par une extrémité d'une virole du redresseur et écartées d'un jeu faible de l'autre virole à leur autre extrémité.

Selon l'invention, une seule des viroles du redresseur est formée d'une pièce avec le diffuseur, et l'autre virole du redresseur est rapportée et fixée, par exemple par soudure, sur le diffuseur de manière à ce que le dispositif soit monobloc. Le dispositif selon l'invention ne nécessite donc pas de moyens de fixation particuliers qui sont lourds et encombrants, ce qui permet de réduire la masse du dispositif et de ne pas limiter la fonction aérodynamique de guidage du flux d'air du dispositif.

L'invention est donc en compromis entre les techniques de fabrication utilisées jusque-là et elle permet d'optimiser les fonctions tout en conservant une relative commodité de fabrication. En particulier, les formes et dimensions du redresseur peuvent être optimisées indépendamment de celles du diffuseur et ne sont pas limitées par le procédé de réalisation du dispositif, le redresseur pouvant être complexe et avoir une faible dimension radiale et un grand nombre d'aubes. Par exemple, lorsqu'une des viroles du redresseur et le diffuseur sont formés d'une seule pièce de fonderie avec les aubes du redresseur et avec les cloisons radiales du diffuseur, les noyaux de fonderie sont facilement accessibles pour leur extraction du fait de l'absence de l'autre des viroles du redresseur.

L'invention permet, de façon générale, l'économie de la réalisation d'une virole du redresseur, puisque cette virole vient de fonderie avec le diffuseur. Elle permet aussi l'économie de la réalisation des aubes du redresseur, lorsque celles-ci sont faites de fonderie avec le diffuseur.

Elle est de plus simple à fabriquer et à mettre en place et permet un gain de masse non négligeable par rapport aux techniques actuelles. Elle réduit aussi les risques de non-conformité, elle diminue les temps de fabrication et elle améliore la fiabilité puisque l'ensemble redresseur-diffuseur est monobloc au final.

Selon une autre caractéristique de l'invention, la virole externe du redresseur et la paroi de révolution externe du diffuseur sont formées d'une seule pièce et l'extrémité de la virole interne du redresseur est fixée, par exemple par soudage, à l'extrémité amont de la paroi de révolution interne du diffuseur.

Dans un mode de réalisation de l'invention, les aubes du redresseur sont solidaires par leur extrémité radialement externe de la virole externe du redresseur et sont séparées par un faible jeu radial de la virole interne du redresseur.

En variante, les aubes du redresseur sont solidaires par leur extrémité radialement interne de la virole interne du redresseur et sont séparées par un faible jeu radial de la virole externe du redresseur.

Le jeu entre les aubes et la virole du redresseur est par exemple compris entre 0,1 et 0,5mm environ en fonctionnement.

Les aubes sont rendues solidaires de la virole du redresseur par emboîtement et fixation, par exemple par brasage, d'une des extrémités des aubes dans une fente correspondante prévue sur cette virole. Les aubes peuvent ainsi être optimisées et réalisées indépendamment de la virole sur laquelle elles sont fixées.

En variante, les aubes sont formées d'une seule pièce avec la virole du redresseur. Lorsque cette virole est la virole externe du redresseur, les aubes sont formées en même temps que le diffuseur.

La virole interne du redresseur comprend avantageusement un rebord annulaire axial coopérant avec la paroi de révolution interne du diffuseur pour faciliter le positionnement et la fixation de la virole sur le diffuseur.

L'invention concerne également un diffuseur pour une turbomachine, comprenant deux parois de révolution coaxiales reliées entre elles par des cloisons radiales, caractérisé en ce que l'une des parois de révolution du diffuseur se prolonge axialement en amont au-delà de l'autre des parois de révolution du diffuseur pour former une virole d'un redresseur destiné à être situé axialement en amont du diffuseur.

Selon un mode de réalisation, le prolongement vers l'amont de la paroi du diffuseur comporte une pluralité de fentes radiales traversantes régulièrement réparties autour de l'axe du diffuseur. Le nombre de ces fentes est par exemple supérieur à 100.

En variante, le prolongement vers l'amont de la paroi du diffuseur est formé d'une seule pièce avec des aubes radiales régulièrement réparties autour de l'axe du diffuseur. Le nombre de ces aubes est par exemple supérieur à 100.

L'invention concerne encore une virole pour un redresseur de turbomachine, caractérisée en ce qu'elle est formée d'une pièce avec des aubes s'étendant radialement depuis une surface cylindrique de la virole et régulièrement réparties autour de l'axe de la virole.

L'invention concerne en outre une virole pour un redresseur de turbomachine, caractérisée en ce qu'elle comporte une pluralité de fentes radiales traversantes régulièrement réparties autour de l'axe de la virole.

L'invention concerne de plus une aube pour un redresseur de turbomachine, comprenant un bord d'attaque et un bord de fuite de gaz, caractérisée en ce qu'elle comprend à une de ses extrémités longitudinales des moyens d'emboîtement dans une fente correspondante d'une virole de redresseur, dans une direction sensiblement parallèle à l'axe longitudinal de l'aube.

L'invention concerne enfin une turbomachine, telle qu'un turboréacteur ou un turbopropulseur d'avion, caractérisée en ce qu'elle comprend un dispositif tel que décrit ci-dessus.

L'invention sera mieux comprise et d'autres détails, caractéristiques et avantages de la présente invention apparaîtront à la lecture de la description suivante faite à titre d'exemple non limitatif et en référence aux dessins annexés, dans lesquels :
- la figure 1 est une vue schématique partielle en coupe axiale du dispositif de guidage d'un flux d'air selon l'invention ;
- la figure 2 est une vue à plus grande échelle d'une partie de la figure 1 ;
- la figure 3 est une vue schématique en perspective d'une variante de réalisation du dispositif selon l'invention, vue de l'amont et sans la virole interne du redresseur ;
- la figure 4 est une autre vue schématique en perspective du dispositif de la figure 3 ;
- la figure 5 est une vue correspondant à la figure 2 et illustrant une autre variante de réalisation de l'invention ;
- la figure 5a est une vue agrandie d'un détail de réalisation dans une variante de l'invention ;
- la figure 6 est une vue schématique en perspective du dispositif de la figure 5, vu de l'amont et sans la virole interne et les aubes du redresseur ;
- la figure 7 est une vue schématique en perspective d'une partie du redresseur de la figure 6 ;
- la figure 8 est une vue correspondant à la figure 7 et illustrant une variante de réalisation du redresseur.

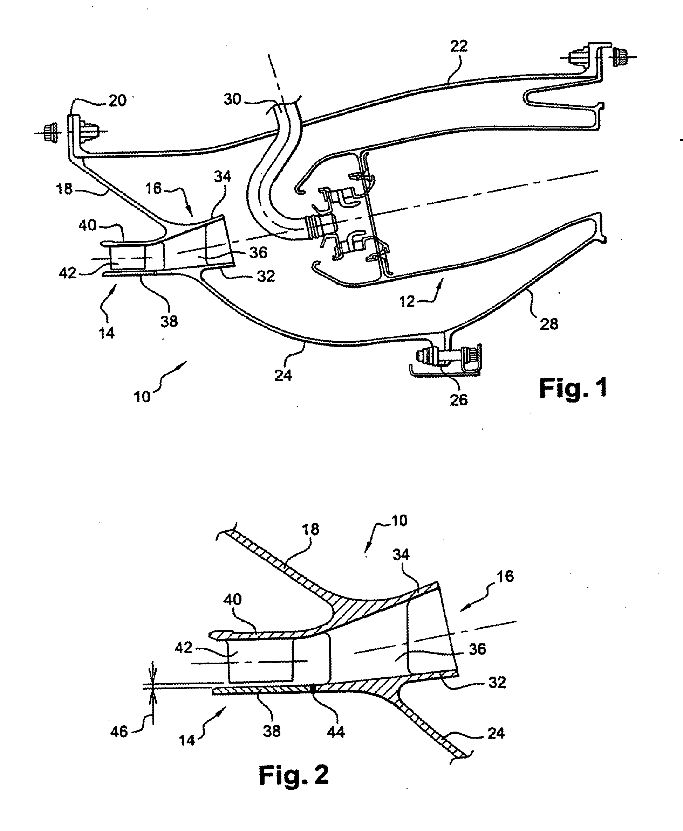

Le dispositif 10 selon l'invention représenté en figure 1 est monté axialement entre un compresseur (non représenté) situé en amont et une chambre de combustion 12 de la turbomachine pour assurer le redressement et le guidage du flux d'air sortant du compresseur et l'alimentation en air de la chambre 12 qui alimente elle-même une turbine (non représentée) agencée en aval de la chambre.

Ce dispositif 10 comprend d'amont en aval un redresseur 14 et un diffuseur 16 qui sont reliés l'un à l'autre et supportés par un voile tronconique externe 18 qui s'étend en amont vers l'extérieur et qui est fixé par une bride annulaire externe 20 à un carter externe 22 de la chambre, et par un voile tronconique interne 24 qui s'étend en aval vers l'intérieur et qui est fixée par une bride annulaire interne 26 à un carter interne 28 de la chambre 12.

Le carter externe 22 de la chambre porte des injecteurs 30 de carburant régulièrement répartis sur une circonférence autour de l'axe longitudinal de la chambre et débouchant à leur extrémité radialement interne dans la chambre. Le carburant injecté dans la chambre est destiné à se mélanger à de l'air sortant du dispositif 10 et à être brûlé puis injecté dans la turbine pour l'entraînement en rotation d'un arbre de la turbomachine.

Le diffuseur 16 comprend une paroi de révolution interne 32 reliée au voile tronconique interne 24 et une paroi de révolution externe 34 reliée au voile tronconique externe 18, les parois 32 et 34 étant reliées l'une à l'autre par des cloisons radiales 36, par exemple au nombre de 18.

Le redresseur 14 comprend une virole interne 38 qui est alignée axialement avec la paroi de révolution interne 32 du diffuseur, une virole externe 40 qui est alignée axialement avec la paroi de révolution externe 34 du diffuseur, et des aubes 42 qui s'étendent radialement entre les viroles interne 32 et externe 40 du redresseur. Les aubes 42 sont par exemple au nombre de 126 et sont indépendantes et décalées axialement vers l'amont des cloisons radiales 36 du diffuseur.

Dans l'exemple représenté en figures 1 et 2, la virole externe 40 et les aubes 42 du redresseur 14 sont formées d'une seule pièce avec la paroi externe 34 du diffuseur 16. La virole interne 38 du redresseur est fixée à son extrémité aval par exemple par soudage 44 sur l'extrémité amont de la paroi interne 32 du diffuseur, et est séparée de l'extrémité radialement interne de chaque aube 42 par un faible jeu radial 46. Les aubes 42 et la virole externe 40 du redresseur sont par exemple réalisées d'une seule pièce de fonderie avec le diffuseur 16. Le diamètre interne de la virole 38 à son extrémité aval est égal au diamètre interne de la paroi 32 du diffuseur à son extrémité amont.

Le jeu radial 46 entre les extrémités radialement internes des aubes et la virole interne peut varier de 0,1 à 0,5mm en fonctionnement du fait des dilatations thermiques et des forces centrifuges auxquelles sont soumises les aubes 42 et la viroles 38, 40 du redresseur.

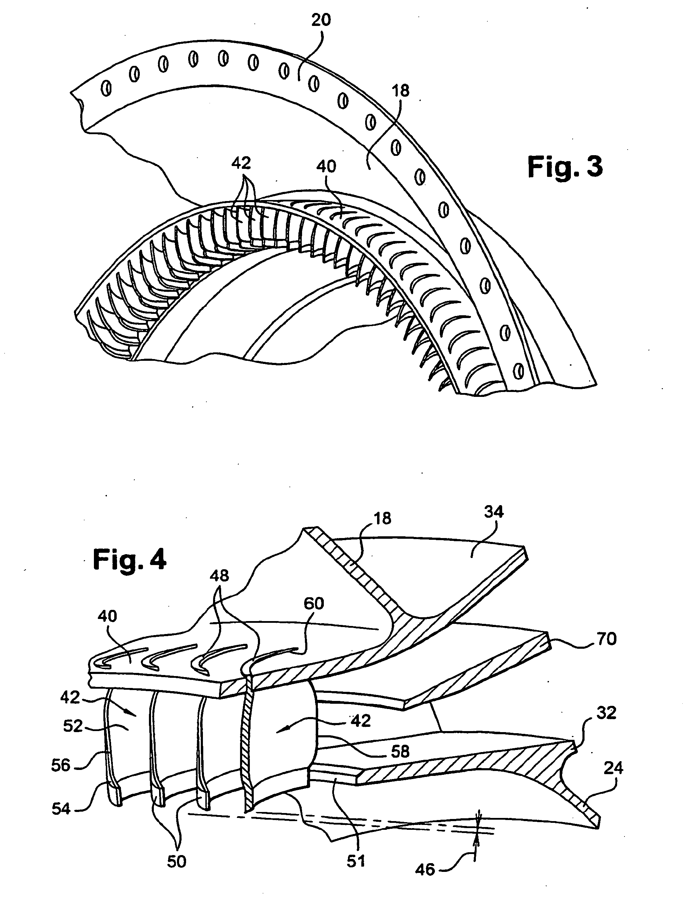

Dans la variante de réalisation représentée aux figures 3 et 4, les aubes 42 sont fixées à leur extrémité radialement externe 48 sur la virole externe 40 du redresseur qui est toujours formée d'une seule pièce avec le diffuseur 16. Les extrémités radialement internes 50 des aubes sont écartées d'un faible jeu radial 46 de la virole interne (non représentée) du redresseur qui est fixée par soudage à l'extrémité amont 51 de la paroi interne 32 du diffuseur.

Les aubes 42 comprennent de façon classique un intrados 52 ou surface intérieure concave et un extrados 54 ou surface extérieure convexe qui sont reliés à leur extrémité amont à un bord d'attaque 56 et à leur extrémité aval à un bord de fuite 58. Les aubes sont par exemple réalisées par ECM (Electro Chemical Machining).

La partie d'extrémité radialement externe de chaque aube forme des moyens 48 d'emboîtement dans une fente 60 correspondante prévue dans la virole externe 34 du redresseur. Les fentes 60 sont sensiblement radiales et traversantes, et sont régulièrement réparties autour de l'axe de la virole. Les moyens d'emboîtement 48 de l'aube sont engagés dans une fente 60 dans une direction sensiblement radiale et sont retenus dans celle-ci par exemple par brasage de l'extrémité radialement externe de l'aube sur la surface cylindrique extérieure de la virole 40. Les fentes 60 peuvent être formées de fonderie ou par découpe laser de la virole.

Dans une exemple particulier de réalisation, les aubes 42 sont calées en position dans les fentes 60 de la virole au moyen de billes de brasure (de 1 mm de diamètre par exemple) qui sont pointées manuellement ou par flash électrique entre les extrémités radialement externes des aubes et la surface cylindrique extérieure de la virole.

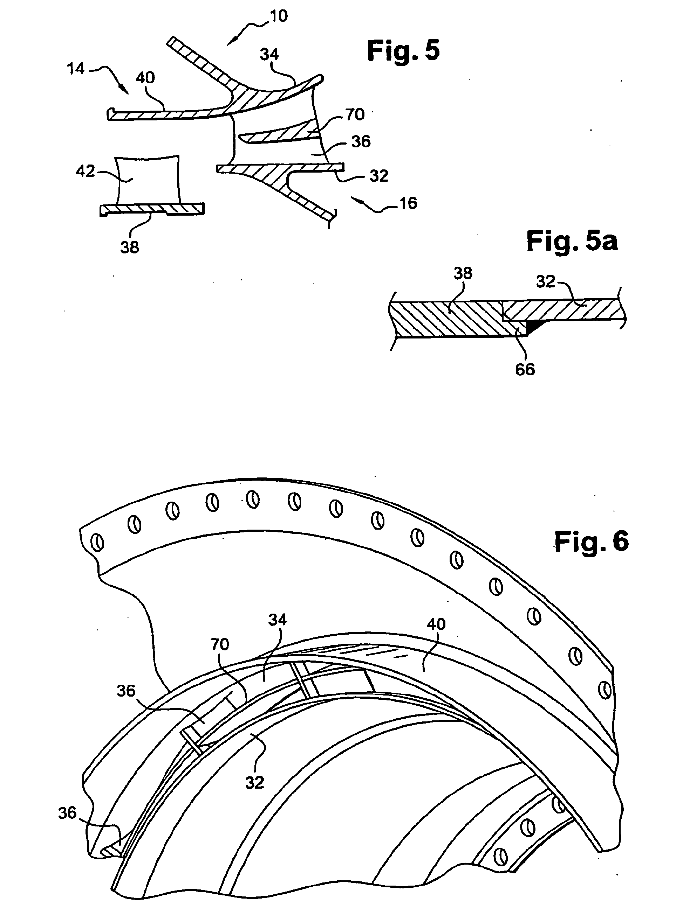

Dans une autre variante représentée aux figures 5 à 8, les aubes 42 du redresseur sont solidaires par leur extrémité radialement interne de la virole interne 38 du redresseur qui est rapportée et fixée à son extrémité aval sur l'extrémité amont de la paroi interne 32 du diffuseur. La virole externe 40 du diffuseur est formée d'une seule pièce avec le diffuseur 16 et est séparée d'un faible jeu radial de l'extrémité radialement externe de chaque aube.

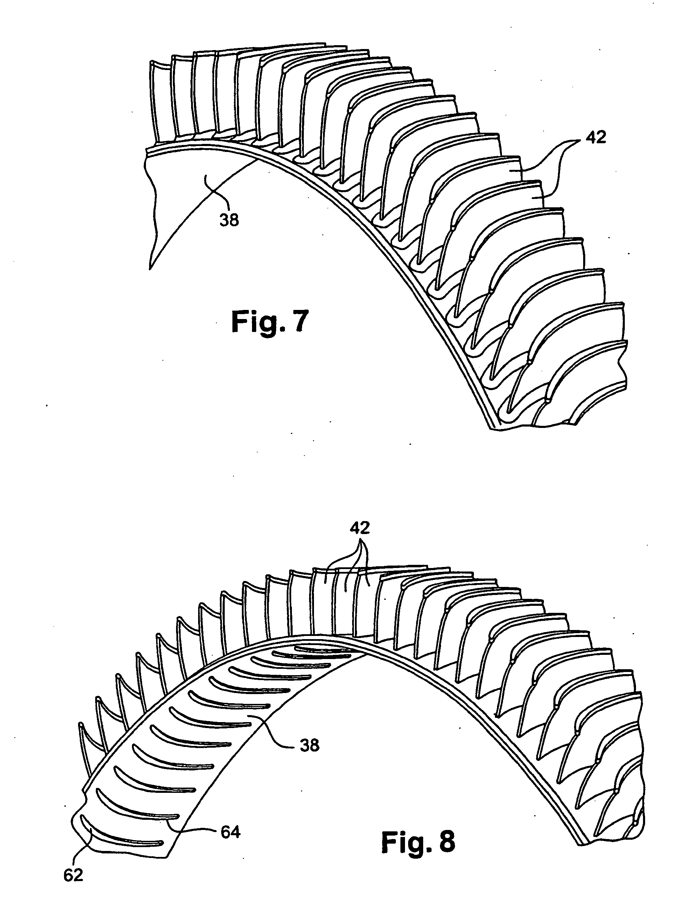

En figure 7, les aubes 42 et la virole interne 38 du redresseur sont formées d'une seule pièce par une technique appropriée telle que par fonderie, par EDM (Electro Discharge Machining), par fraisage à grande vitesse, etc.

En variante et comme représenté en figure 8, les extrémités radialement internes 62 des aubes 42 sont emboîtées et fixées dans des fentes radiales 64 correspondantes de la virole interne. Ces aubes sont semblables à celles décrites en référence aux figures 3 et 4, et les fentes 64 de la virole sont traversantes et régulièrement réparties autour de l'axe de la virole. Les extrémités radialement internes des aubes peuvent être fixées par brasage sur la surface cylindrique intérieure de la virole 38.

La virole interne 38 du redresseur comprend avantageusement un rebord annulaire axial 66 de centrage (figure 5a) destiné à être engagé radialement à l'intérieur de la paroi interne du diffuseur pour faciliter le montage de la virole. La virole 38 est dans ce cas fixée sur la paroi 32 du diffuseur par soudage de l'extrémité aval de ce rebord 66 sur la surface cylindrique intérieure de la paroi 32 pour éviter que les points ou le cordon de soudure ne fassent saillie à l'intérieur et perturbent l'écoulement de l'air dans le dispositif. La virole interne 38 de chaque dispositif précédemment décrit peut également être équipée de ce rebord axial 66.

Dans les exemples des figures 4, 5 et 6, le diffuseur 16 comprend un séparateur 70 qui est porté par les cloisons radiales 36 du diffuseur entre ses parois interne 32 et externe 34, ce séparateur ayant pour fonction de diviser le flux de gaz sortant du redresseur en deux veines annulaires coaxiales.

Le redresseur 14 et le diffuseur 16 sont par exemple réalisés dans un alliage à base de Nickel et de Chrome.

## Revendications

1. Dispositif de guidage d'un flux d'air à l'entrée d'une chambre de combustion dans une turbomachine, comprenant un redresseur (14) suivi d'un diffuseur (16), le redresseur comportant deux viroles coaxiales (38, 40) entre lesquelles s'étendent des aubes (42) sensiblement radiales, et le diffuseur comportant deux parois de révolution coaxiales (32, 34) reliées entre elles par des cloisons radiales (36), **caractérisé en ce qu'**une des viroles (40) du redresseur est formée d'une seule pièce avec une paroi de révolution (34) du diffuseur; l'autre des viroles (38) du redresseur étant rapportée et fixée sur l'autre paroi de révolution (32) du diffuseur, les aubes du redresseur étant solidaires par une extrémité d'une virole du redresseur et écartées d'un jeu faible (46) de l'autre virole à leur autre extrémité.

2. Dispositif selon la revendication 1, **caractérisé en ce que** la virole externe (40) du redresseur et la paroi de révolution externe (34) du diffuseur sont formées d'une seule pièce, et l'extrémité de la virole interne (38) du redresseur est fixée à l'extrémité amont de la paroi de révolution interne (32) du diffuseur.

3. Dispositif selon la revendication 2, **caractérisé en ce que** la virole externe (40) du redresseur est réalisée d'une seule pièce de fonderie avec le diffuseur.

4. Dispositif selon la revendication 2 ou 3, **caractérisé en ce que** l'extrémité aval de la virole interne (38) du redresseur est fixée par soudage à l'extrémité amont de la paroi de révolution interne (32) du diffuseur.

5. Dispositif selon l'une des revendications 2 à 4, **caractérisé en ce que** les aubes (42) du redresseur sont solidaires par leur extrémité radialement externe de la virole externe (40) du redresseur et sont séparées par un faible jeu radial (46) de la virole interne (38) du redresseur.

6. Dispositif selon l'une des revendications 2 à 4, **caractérisé que** les aubes (42) du redresseur sont solidaires par leur extrémité radialement interne de la virole interne (38) du redresseur et sont séparées par un faible jeu radial de la virole externe (40) du redresseur.

7. Dispositif selon la revendication 5 ou 6, **caractérisé en ce que** les aubes (42) sont rendues solidaires de la virole (38, 40) du redresseur par emboîtement et fixation, par exemple par brasage, d'une des extrémités des aubes dans une fente (64, 60) correspondante prévue sur cette virole.

8. Dispositif selon la revendication 5 ou 6, **caractérisé en ce que** les aubes (42) sont formées d'une seule pièce avec la virose (38, 40) du redresseur.

9. Dispositif selon l'une des revendications 2 à 8, **caractérisé en ce que** la virole interne (38) du redresseur comprend un rebord annulaire axial (62) engagé radialement à l'intérieur de la paroi de révolution interne (32) du diffuseur.

10. Dispositif selon l'une des revendications précédentes, **caractérisé en ce que** le jeu entre les aubes (42) et la virole (38, 40) du redresseur est compris entre 0,1 et 0.5mm environ en fonctionnement.

11. Turbomachine, telle qu'un turboréacteur ou un turbopropulseur d'avion, **caractérisée en ce qu'**elle comprend un dispositif (10) selon l'une des revendications précédentes.

12. Diffuseur pour une turbomachine, comprenant deux parois de révolution coaxiales (32, 34) reliées entre elles par des cloisons radiales (36), **caractérisé en ce que** l'une des parois de révolution (34) du diffuseur se prolonge axialement en amont au-delà de l'autre des parois de révolution du diffuseur pour former une virole d'un redresseur destiné à être situé axialement en amont du diffuseur.

13. Diffuseur selon la revendication 12, **caractérisé en ce que** le prolongement vers l'amont de la paroi du diffuseur comporte une pluralité de fentes radiales traversantes (60) régulièrement réparties autour de l'axe du diffuseur.

14. Diffuseur selon la revendication 12, **caractérisé en ce que** le prolongement vers l'amont de la paroi du diffuseur est formé d'une seule pièce avec des aubes radiales (42) régulièrement réparties autour de l'axe du diffuseur.

15. Diffuseur selon la revendication 13 ou **caractérisé en ce que** le prolongement vers l'amont de la paroi du diffuseur comporte plus de 100 fentes ou aubes radiales.

## Claims

1. A device for guiding a stream of air at the inlet to a combustion chamber in a turbomachine, the device comprising a straightener (14) followed by a diffuser (16), the straightener comprising two coaxial shrouds (38, 40) having substantially radial vanes (42) extending therebetween, and the diffuser including two coaxial walls (32, 34) forming bodies of revolution that are interconnected by radial partitions (36), the device being **characterized in that** one of the shrouds (40) of the straightener is formed integrally with one of the walls (34) of the diffuser, the other shroud (38) of the straightener being a separate part fastened on the other wall (32) of the diffuser, the vanes of the straightener being secured at one end to one shroud of the straightener and being spaced apart at the other end from the other shroud by a small clearance (46).

2. A device according to claim 1, **characterized in that** the outer shroud (40) of the straightener and the outer wall (34) of the diffuser are formed as a single part, and the end of the inner shroud (38) of the straightener is fastened to the upstream end of the inner wall (32) of the diffuser.

3. A device according to claim 2, **characterized in that** the outer shroud (40) of the straightener is made as a single casting with the diffuser.

4. A device according to claim 2 or claim 3, **characterized in that** the downstream end of the inner shroud (38) of the straightener is fastened to the upstream end of the inner wall (32) of the diffuser by welding.

5. A device according to any one of claims 2 to 4, **characterized in that** the vanes (42) of the straightener are secured by their radially outer ends to the outer shroud (40) of the straightener and are separated from the inner shroud (38) of the straightener by a small radial clearance (46).

6. A device according to any one of claims 2 to 4, **characterized in that** the vanes (42) of the straightener are secured via their radially-inner ends to the inner shroud (38) of the straightener and are separated from the outer shroud (40) of the straightener by a small radial clearance.

7. A device according to claim 5 or claim 6, **characterized in that** the vanes (42) are secured to the shroud (38, 40) of the straightener by mutual engagement and fastening, e.g. by brazing, one of the ends of each vane in a corresponding slot (64, 60) provided in the shrouds.

8. A device according to claim 5 or claim 6, **characterized in that** the vanes (42) are formed integrally with the shroud (38, 40) of the straightener.

9. A device according to any one of claims 2 to 8, **characterized in that** the inner shroud (38) of the straightener includes an axial annular rim (62) engaged radially inside the inner wall (32) of the diffuser.

10. A device according to any preceding claim, **characterized in that** the clearance between the vanes (42) and the shroud (38, 40) of the straightener lies in the range approximately 0.1 mm to 0.5 mm, in operation.

11. A turbomachine such as an airplane turbojet or turboprop, **characterized in that** it includes a device (10) according to any preceding claim.

12. A turbomachine diffuser comprising two coaxial walls (32, 34) forming bodies of revolution that are connected together by radial partitions (36), the diffuser being **characterized in that** one of the walls (34) of the diffuser is extended axially upstream beyond the other wall of the diffuser Lo form a shroud of a straightener that is designed to be situated axially upstream from the diffuser.

13. A diffuser according to claim 12, **characterized in that** the upstream extension of the wall of the diffuser includes a plurality of through radial slots (60) regularly distributed around the axis of the diffuser.

14. A diffuser according to claim 12, **characterized in that** the upstream extension of the wall of the diffuser is made integrally with radial vanes (42) regularly distributed around the axis of the diffuser.

15. A diffuser according to claim 13 or claim 14, **characterized in that** the upstream extension of the wall of the diffuser includes more than 100 slots or radial vanes.

## Patentansprüche

1. Leitvorrichtung für einen Luftstrom am Eintritt einer Brennkammer eines Turbotriebwerks, welche einen Leitschaufelapparat (14), gefolgt von einem Diffusor (16), umfasst, wobei der Leitschaufelapparat zwei koaxiale Ringe (38, 40) enthält, zwischen denen sich im Wesentlichen radiale Schaufeln (42) erstrecken, und wobei der Diffusor zwei koaxiale, umlaufende Wände (32, 34) enthält, die durch radiale Trennwände (36) miteinander verbunden sind,
**dadurch gekennzeichnet,**
**dass** einer der Ringe (40) des Leitsehaufelapparats in einem einzigen Stück mit einer umlaufenden Wand (34) des Diffusors gebildet ist, wobei der andere Ring (38) des Leitschaufelapparats an der anderen umlaufenden Wand (32) des Diffusors angebaut und befestigt ist, wobei die Schaufeln des Leitschaufelapparats mit einem Ende fest mit einem Ring des Leitschaufelapparats verbunden sind und an ihrem anderen Ende mit einem geringen Spiel (46) von dem anderen Ring beabstandet sind.

2. Vorrichtung nach Anspruch 1,
**dadurch gekennzeichnet,**
**dass** der Außenring (40) des Leitsehaufclapparats und die äußere umlaufende Wand (34) des Diffusors in einem einzigen Stuck ausgebildet sind und das Ende des Innenrings (38) des Leitschaufelapparats am vorderen Ende der inneren umlaufenden Wand (32) des Diffusors befestigt ist.

3. Vorrichtung nach Anspruch 2,
**dadurch gekennzeichnet,**
**dass** der Außenring (40) des Leitschaufelapparats in einem einzigen Gussstück mit dem Diffusor ausgeführt ist.

4. Vorrichtung nach Anspruch 2 oder 3,
**dadurch gekennzeichnet,**
**dass** das hintere Ende des Innenrings (38) des Leitschaufelapparats durch Schweißung am vorderen Ende der inneren umlaufenden Wand (32) des Diffusors befestigt ist.

5. Vorrichtung nach einem der Ansprüche 2 bis 4,
**dadurch gekennzeichnet,**
**dass** die Schaufeln (42) des Leitschaufelapparats an ihrem radial äußeren Ende fest mit dem Außenring (40) des Leitschaufelapparats verbunden sind und durch ein geringes radiales Spiel (46) von dem Innenring (38) des Leitschaufelapparats getrennt sind.

6. Vorrichtung nach einem der Ansprüche 2 bis 4,
**dadurch gekennzeichnet,**
**dass** die Schaufeln (42) des Leitschaufelapparats an ihrem radial inneren Ende fest mit dem Innenring (38) des Leitschaufelapparats verbunden sind und durch ein geringes radiales Spiel von dem Außenring (40) des Leitschaufelapparats getrennt sind.

7. Vorrichtung nach Anspruch 5 oder 6,
**dadurch gekennzeichnet,**
**dass** die Schaufeln (42) mit dem Ring (38, 40) des Leitschaufelapparats fest verbunden werden, indem eines der Schaufelenden in einen entsprechenden, an diesem Ring vorgesehenen Schlitz (64, 60) gesteckt und befestigt werden, beispielsweise durch Löten.

8. Vorrichtung nach Anspruch 5 oder 6,
**dadurch gekennzeichnet,**
**dass** die Schaufeln (42) in einem Strick mit dem Ring (38, 40) des Leitschaufelapparats ausgebildet sind.

9. Vorrichtung nach einem der Ansprüche 2 bis 8,
**dadurch gekennzeichnet,**
**dass** der Innenring (38) des Leitschanfelapparats einen axialen, ringförmigen Rand (62) aufweist, der radial in das Innere der inneren umlaufenden Wand (32) des Diffusors eingreift.

10. Vorrichtung nach einem der vorherigen Ansprüche,
**dadurch gekennzeichnet,**
**dass** das Spiel zwischen den Schaufeln (42) und dem Ring (38, 40) des Leitschaufelapparats im Betrieb ca. zwischen 0,1 und 0,5 mm beträgt.

11. Turbotriebwerk wie beispielsweise ein Turboluftstrahltriebwerk oder ein Turboproptriebwerk für Flugzeuge,
**dadurch gekennzeichnet,**
**dass** es eine Vorrichtung (10) gemäß einem der vorherigen Ansprüche aufweist.

12. Diffusor für Turbotriebwerlce, der zwei koaxiale, umlaufende Wände (32, 34) aufweist, die durch radiale Trennwände (36) miteinander verbunden sind,
**dadurch gekennzeichnet,**
**dass** sich die eine der umlaufenden Wände (34) des Diffusors axial nach vom über die andere der umlaufenden Wände des Diffusors fortsetzt, um einen Ring eines Leitschaufelapparats zu bilden, welcher sich axial vor dem Diffusor befinden soll.

13. Diffusor nach Anspruch 12,
**dadurch gekennzeichnet,**
**dass** der Fortsatz der Wand des Diffusors nach vom eine Vielzahl von radialen, durchgebenden Schlitzen (60) aufweist, die in regelmäßigen Abständen voneinander um die Achse des Diffusors herum verteilt angeordnet sind.

14. Diffusor nach Anspruch 12,
**dadurch gekennzeichnet,**
**dass** der Fortsatz der Wand des Diffusors nach vom in einem Stück mit radialen Schaufeln (42) ausgebildet ist, welche in regelmäßigen Abständen voneinander um die Achse des Diffusors herum verteilt angeordnet sind.

15. Diffusor nach Anspruch 13 oder 14,
**dadurch gekennzeichnet,**
**dass** der Fortsatz der Wand des Diffusors nach vorn mehr als 100 Schlitze oder radiale Schaufeln aufweist.
